# EUROPEAN PATENT APPLICATION

(11) **EP 3 337 263 A1**
(43) Date of publication of application: **20.06.2018**
(21) Application number: 16834960.3
(22) Date of filing: 25.07.2016
(51) Int. Cl.: H04W 72/04, H04W 16/32, H04W 28/16, H04W 76/00

(54) **USER DEVICE, AND CONNECTION CONTROL METHOD**

(30) Priority: 12.08.2015 JP 2015159694
(71) Applicant: NTT DOCOMO, INC., Chiyoda-ku Tokyo 100-6150 (JP)
(72) Inventor: UCHINO, Tooru, Tokyo 100-6150 (JP); HAPSARI, Wuri Andarmawanti, Tokyo 100-6150 (JP); UMESH, Anil, Tokyo 100-6150 (JP); TAKAHASHI, Hideaki, Tokyo 100-6150 (JP); ABETA, Sadayuki, Tokyo 100-6150 (JP)
(74) Representative: Hoffmann Eitle
(86) International application number: PCT/JP2016/071761
(87) International publication number: WO 2017/026263

(57) **Abstract**

A user apparatus in a mobile communication system including a first base station that sets a link of a control plane between the first base station and the user apparatus, and a second base station that sets a link of a user plane between the second base station and the user apparatus, including: radio link monitoring means configured to perform monitoring of a radio link; and connection control means configured, when disconnection of the link of the control plane is detected by the radio link monitoring means, to perform reestablishment of the link of the control plane for the user apparatus while maintaining the link of the user plane.

## Description

### TECHNICAL FIELD

The present invention relates to a mobile communication system in which a user apparatus monitors a radio link.

### BACKGROUND ART

In LTE, in order to maintain connectivity between a user apparatus UE and a network, the user apparatus UE monitors a radio link (a link between UE-eNB) (non-patent document 1, non-patent document 2) .

When the user apparatus UE detects failure in a radio link (RLF: Radio Link Failure), the user apparatus UE starts a reconnection procedure (connection re-establishment procedure) to reconnect to a best cell (non-patent document 2). The "failure" here is, for example, DL quality deterioration of a PCell, RA problem in a PCell, UL RLC maximum retransmission excess and the like.

When performing the reconnection procedure, the user apparatus UE once releases individual configuration information (except for a part) so as to use a predetermined configuration. After that, the user apparatus receives, from a base station eNB, a new configuration. Therefore, when reconnection occurs, U-plane transmission and reception are temporarily stopped.

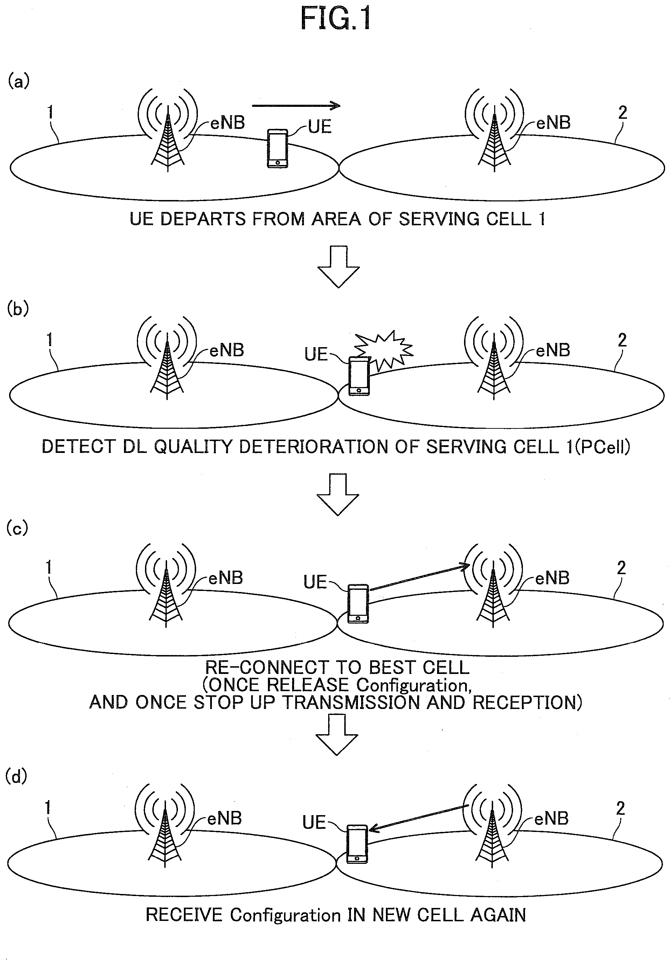

Fig. 1 shows an example of the reconnection procedure. As shown in Fig. 1(a), the user apparatus UE residing in a cell 1 which is a serving cell (PCell) departs from the cell 1 and enters an area of a cell 2, so that, as shown in Fig. 1(b), the user apparatus UE detects DL quality deterioration of the cell 1.

As shown in Fig. 1(c), as a result of cell search, the user apparatus UE performs reconnection to the cell 2 detected as the best cell. Here, the configuration is once released and transmission and reception of U-plane are stopped. Then, as shown in Fig. 1(d), the user apparatus UE receives a configuration anew in the cell 2 to perform communication in the cell 2.

### RELATED ART DOCUMENT

### [NON PATENT DOCUMENT]

[NON PATENT DOCUMENT 1] 3GPP TS 36.300 V13.0.0 (2015-06)
[NON PATENT DOCUMENT 2] 3GPP TS 36.331 V12.6.0 (2015-06)
[NON PATENT DOCUMENT 3] 3GPP TS 36.323 V12.4.0 (2015-06)

### SUMMARY OF THE INVENTION

### PROBLEM TO BE SOLVED BY THE INVENTION

The radio protocol architecture in LTE can be divided into U-plane (user plane) in which user data is handled, and C-plane (control plane) in which control signals on user communication are handled (non-patent document 1).

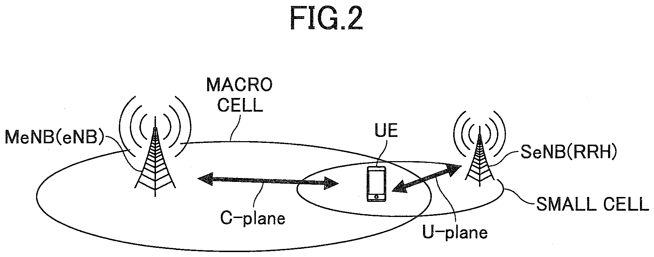

In LTE, it is possible that one base station eNB can transmit and receive both of the signal of U-plane and the signal of C-plane. However, in recent years, as shown in Fig. 2, a C/U separated network configuration is proposed in which a macro cell that covers a wide range serves C-plane, and a small cell of high frequency and high speed serves U-plane. In this configuration, even when a large number of small cells are placed, throughput can be maintained since it is not necessary to perform disconnection and connection of C-plane by handover between small cells.

As shown in Fig. 2, the C/U separated configuration can be realized by using Dual connectivity (to be referred to as DC hereinafter) introduced in Rel-12. An MeNB in DC forms a macro cell (PCell in MCG), and an SeNB forms a small cell (SCell in SCG).

The C/U separated configuration can be also realized by using carrier aggregation (to be referred to as CA hereinafter) introduced in Rel-10. In that case, as shown in parentheses in Fig. 2, an eNB forms a macro cell (PCell), and a remote radio apparatus (RRH) connected from the eNB by an optical fiber and the like forms a small cell (SCell).

In the above-mentioned configuration, according to the conventional specification of CA and DC, when the user apparatus UE detects failure of communication in the macro cell that serves C-plane, the user apparatus UE performs control to once stop communication including connection with the small cell, and to establish a connection again.

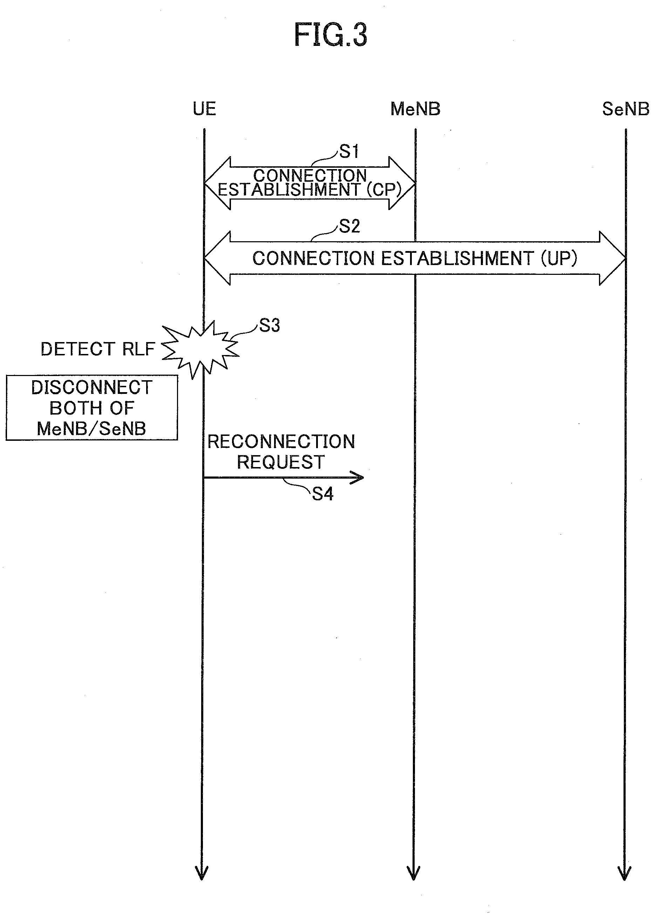

For example, as shown in Fig. 3 corresponding to the configuration of Fig. 2, in a state where a link of C-plane (CP) is established (step S1) and a link of U-plane(UP) is established (step S2), when the user apparatus UE detects failure of the link of C-plane (step S3), the user apparatus UE disconnects both connections of MeNB and SeNB even when the link of U-plane is normal, and starts a procedure for establishing reconnection (step S4).

In 5G which is a mobile communication system of next generation of LTE-Advanced, it is required to realize ultra-low latency communication. But, there is a problem in that low delay communication cannot be realized since the U-plane link that has no problem is reconnected due to disconnection of the C-plane link.

The present invention is contrived in view of the above-mentioned points, and an object of the present invention is to provide a technique for making it possible to realize low delay communication in a mobile communication system including a first base station that sets a link of a control plane with a user apparatus and a second base station that sets a link of a user plane with the user apparatus.

### MEANS FOR SOLVING THE PROBLEM

According to an embodiment of the present invention, there is provided a user apparatus in a mobile communication system including a first base station that sets a link of a control plane between the first base station and the user apparatus, and a second base station that sets a link of a user plane between the second base station and the user apparatus, including:
radio link monitoring means configured to perform monitoring of a radio link; and
connection control means configured, when disconnection of the link of the control plane is detected by the radio link monitoring means, to perform reestablishment of the link of the control plane for the user apparatus while maintaining the link of the user plane.

According to an embodiment of the present invention, there is provided a connection control method executed by a user apparatus in a mobile communication system including a first base station that sets a link of a control plane between the first base station and the user apparatus, and a second base station that sets a link of a user plane between the second base station and the user apparatus, including:
monitoring a radio link; and
when disconnection of the link of the control plane is detected by the monitoring of the radio link, performing reestablishment of the link of the control plane for the user apparatus while maintaining the link of the user plane.

### EFFECT OF THE PRESENT INVENTION

According to an embodiment of the present invention, there is provided a technique for making it possible to realize low delay communication in a mobile communication system including a first base station that sets a link of a control plane with a user apparatus and a second base station that sets a link of a user plane with the user apparatus.

### BRIEF DESCRIPTION OF THE DRAWINGS

Fig. 1 is a diagram for explaining a conventional technique on radio link monitoring;
Fig. 2 is a diagram showing a configuration example of a communication system in which C-plane and U-plane are separated;
Fig. 3 is a diagram for explaining a problem of the conventional technique;
Fig. 4 is a diagram showing a configuration example of a communication system according to an embodiment of the present invention;
Fig. 5 is a diagram showing a radio protocol configuration of a user apparatus UE in DC;
Fig. 6 is a diagram showing a configuration example of a communication system according to an embodiment of the present invention;
Fig. 7 is a diagram for explaining a whole operation example after a C-plane link is disconnected;
Fig. 8 is a diagram showing a configuration example of sidelink (D2D);
Fig. 9 is a diagram showing a procedure for reestablishing a C-plane link;
Fig. 10 is a diagram for explaining an operation example when a C-plane link cannot be established;
Fig. 11 is a diagram for explaining an operation example when a C-plane link cannot be established;
Fig. 12 is a block diagram of a user apparatus UE;
Fig. 13 is a block diagram of a base station eNB;
Fig. 14 is a diagram showing an example of a hardware configuration of the base station eNB and the user apparatus UE.

### EMBODIMENTS FOR CARRYING OUT THE INVENTION

In the following, an embodiment of the present invention is described with reference to figures. The embodiment described below is merely an example, and the embodiment to which the present invention is applied is not limited to the embodiment below. For example, it is assumed that the communication system of the present embodiment supports LTE (Rel-8∼Rel.13 and after that) including LTE-Advanced, and 5G. However, the present invention is not limited to these schemes, and can be applied to communication systems of other schemes adopting a radio protocol architecture including a function corresponding to U-plane and a function corresponding to C-plane.

Also, in the present embodiment, a link of C-plane is a link of SRB (signaling radio bearer) between a UE and an eNB, and a link of U-plane is a link of DRB (data radio bearer) between a UE and an eNB. Or, a link of C-plane may be a link in a specific cell (Component Carrier, frequency band), and a link of U-plane may be a link of a cell other than the specific cell. However, it is not limited to this.

Also, CA (carrier aggregation) of the present embodiment includes not only Intra-eNB CA but also Inter-eNB CA such as DC (Dual connectivity). For distinguishing these, Intra-eNB CA is referred to as intra-base station CA and Inter-eNB CA is referred to as DC or inter-base station CA.

### (System configuration)

The whole configuration of the present embodiment is a configuration shown in Fig. 2 in which U-plane and C-plane are separated by a small cell and a macro cell.

As described before, since any of intra-base station CA and DC can be utilized in the system, outlines of CA and DC are described first.

When CA is performed, a PCell (Primary cell) that is a reliable cell for ensuring connectivity and an SCell (Secondary cell) that is an appendant cell are set for the user apparatus UE. The user apparatus UE connects to a PCell first, and then, an SCell can be added as necessary. The PCell is a cell similar to an independent cell for supporting RLM (Radio Link Monitoring) and SPS (Semi-Persistent Scheduling) and the like. Addition and deletion of the SCell is performed by RRC (Radio Resource Control) signaling. Also, an UL CC (component carrier) and a DL CC are set in the PCell. As to the SCell, a DL CC is always set, but an UL CC is optionally set.

When performing DC, the user apparatus UE performs communication simultaneously using radio resources of two physically different base stations eNB. DC is a kind of CA, in which Master-eNB (MeNB) and Secondary-eNB (SeNB) are introduced. In DC, (one or a plurality of) cell(s) under an MeNB is called MCG (Master Cell Group), and (one or a plurality of) cell(s) under an SeNB is called SCG (Secondary Cell Group). An UL CC (component carrier) is set in at least one SCell in the SCG, and PUCCH is set in one of the at least one SCell. This SCell is called PSCell (primary SCell).

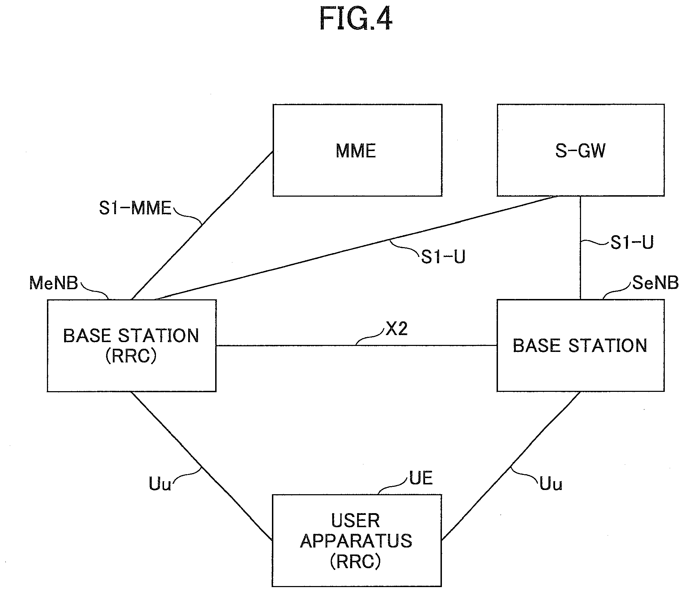

Fig. 4 shows a system configuration example when realizing the configuration of Fig. 2 using DC. As shown in Fig. 4, a base station MeNB and a base station SeNB are provided so that the user apparatus UE communicates with these base stations. In the following, the base station MeNB and the base station SeNB are described as MeNB and SeNB respectively. Also, the user apparatus UE is described as UE.

In Fig. 4, as apparatuses in the core network side, an MME for executing mobility control and the like and an S-GW for performing relay of data are shown. As to the UE, each apparatus is connected by interfaces shown in the figure. Especially, in the present embodiment, C/U separation is applied, as to the UE, the S1-MME interface is connected only to the MeNB, and RRC connection is set only between the MeNB and the UE.

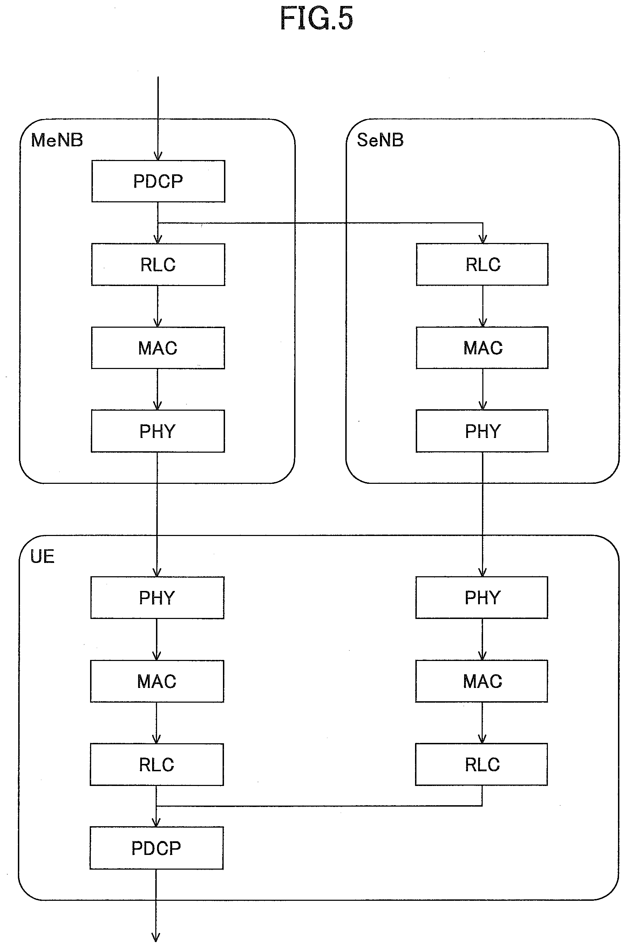

Fig. 5 is a diagram showing a radio protocol configuration example in a case where DC is performed like Fig. 4. Fig. 5 shows an example in a case where split bearer is performed in which the MeNB receives a bearer, splits data of the bearer, so that the MeNB and the SeNB send data of the bearer to the UE. As shown in Fig. 5, in the UE side, entities of PHY, MAC, RLC and PDCP are provided in each of the MeNB side and the SeNB side.

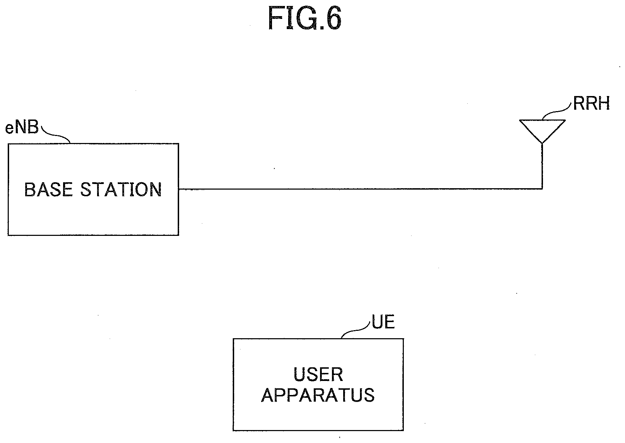

Fig. 6 is a diagram showing a system configuration in a case where the configuration of Fig. 2 is realized by using intra-base station CA in the present embodiment. As shown in Fig. 6, the system is a mobile communication system including a base station eNB (to be referred to as eNB, hereinafter) and a UE. In the configuration of Fig. 6, the eNB itself has a radio unit, and also a remote radio apparatus (RRH) is placed in a place remote from the eNB. In Fig. 6, the eNB forms a PCell to serve C-plane. The RRH forms an SCell to serve U-plane. Since the RRH is a part of the eNB, CA in the configuration of Fig. 6 is intra-base station CA. Note that the RRH can be also referred to as "base station" in that the RRH performs radio communication with the UE.

That is, in any case of Fig. 4 and Fig. 6, the system is an example of a mobile communication system including a first base station that sets a link of a control plane between the first base station a user apparatus and a second base station that sets a link of a user plane between the second base station and the user apparatus.

Note that, hereinafter, a main body for forming a PCell (C-plane) in intra-base station CA is described as eNB, and a main body for forming an SCell (U-plane) is described as eNB·RRH.

Also, as to PCell/MCG serving C-plane, not only a link of C-plane but also a link of U-plane may be configured. For example, a DRB used for UL transmission may be configured in the PCell/MCG.

### (Operation outline of the system)

In the present embodiment, in intra-base station CA/DC, even when a link of C-plane between the UE and the eNB/MeNB is disconnected, U-plane communication continues without disconnecting also a link of U-plane like the conventional technique.

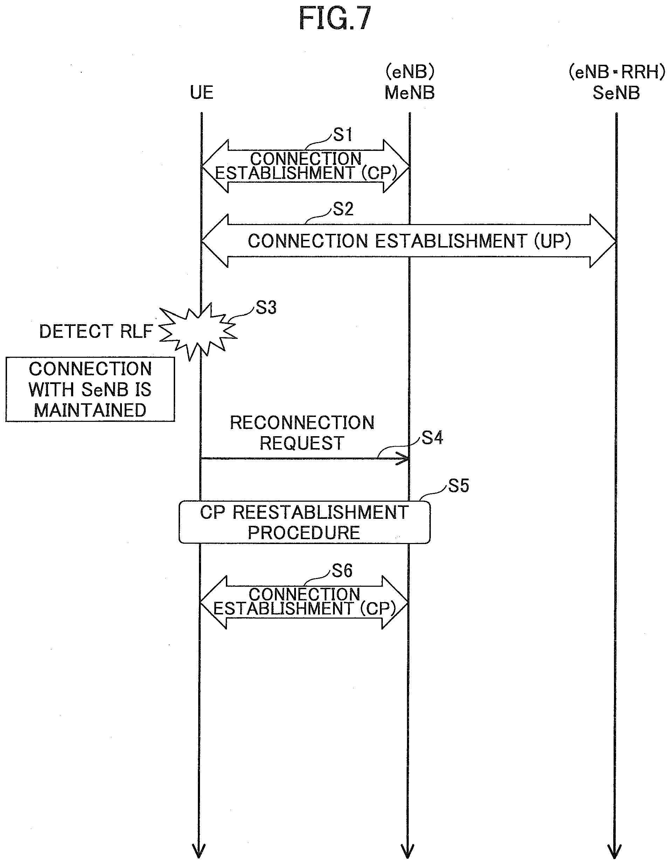

A basic process flow in the present embodiment is described with reference to Fig. 7. Although Fig. 7 assumes a configuration of DC, similar operation can be performed also for intra-base station CA. In Fig. 7, for the configuration of the intra-base station CA, eNB, and eNB·RRH are shown in parentheses.

In step S1, a link of C-plane between the UE and the MeNB/eNB is established, and in step S2, a link of U-plane between the UE and the SeNB/eNB· RRH is established.

In step S3, the UE detects disconnection of the link of C-plane. This "detection of disconnection" is that, for example, the UE detects RLF in a PCell in which a link of C-plane is configured. The RLF is detected, for example, when downlink out of synchronization (out of sync) continues for a predetermined time period. Especially, in the case of DC, the RLF is detected also when it is detected that the number of times of retransmission in the MCG RLC (RLC entity of MeNB side) reaches a predetermined maximum value.

In the present embodiment, even when disconnection of a link of C-plane is detected, communication of U-plane continues without disconnecting the link of U-plane like the conventional technique. That is, the UE continues communication of U-plane without disconnecting a link with the SeNB/eNB·RRH.

Since communication in U-plane can be performed basically by using configuration information such as parameters that are once configured by using C-plane, the communication in U-plane can be continued without communication of C-plane. However, since connection of C-plane is necessary for mobility control and the like, reestablishment of a link of C-plane is performed while continuing communication of U-plane in the present embodiment.

In the example of Fig. 7, an example is shown in which, as a result of cell search, the original MeNB/eNB is selected to perform reconnection request (step S4). In step S5, a reestablishment procedure of a link of C-plane is executed, so that a link of C-plane is established in step S6.

The control of the present embodiment may be executed only when at least one SCell (SCell of SeNB/eNB·RRH side) to which UL CC is set is configured. Also, the control of the present embodiment may be performed exclusively when a PUCCH is configured in the SCell (SCell of the SeNB/eNB· RRH side).

In the following, initial operation when disconnection of a link of C-plane is detected (operation example 1), operation for reestablishing a link of C-plane (operation example 2) and operation when the link of C-plane could not be established in the operation example 2 (operation example 3) are described more concretely respectively.

### (Operation example 1: initial operation when disconnection of a link of C-plane is detected)

Even when the UE of the present embodiment detects disconnection of a link of C-plane, the UE executes operation as described below without stopping communication of U-plane like the conventional technique.

First, every UL transmission in the link of C-plane is stopped basically, so that all configurations are released except for necessary configuration information. Details are as described below.

### <UL: in the case of intra-base station CA>

The UE stops all UL transmissions in the PCell that serves C-plane. As more detailed operation, the UE once stops ongoing RA procedure being executed for UL transmission, and once releases all resources such as dedicated preamble and the like. Also, the UE stops a TA timer of pTAG, or regards that it expires.

CCs configured in the UE are grouped into groups each having almost the same propagation delay. A grouped CC group is referred to as a TAG (Timing Advance Group), and uplink transmission adjustment control is performed for each TAG. Especially, a TAG in which a PCell is included is called pTAG. Also, when the UE receives a TA command, the UE starts a TA timer. After that, when TA timer expires without receiving a TA command, the UE determines that UL out of synchronization occurs so as to stop UL transmission. As described above, UL transmission stops by stopping the TA timer of pTAG or by regarding the TA timer has expired.

### <UL: in the case of DC>

The UE stops all UL transmissions in the MCG. That is, the UE stops all UL transmissions for the MeNB.

As more detailed operation, for example, the UE regards, as 0, p-MeNB (non-patent document 2) indicating a value (Maximum Guaranteed Power) minimally guaranteed as UL transmission power for the MeNB. Accordingly, UL transmission cannot be performed for the MeNB so that UL transmission is stopped.

Also, the UE resets the MCG-MAC entity (MAC functional unit). Also, when an SCell is configured in the MCG, all SCells in the MCG are released. Alternatively, the SCell(s) may be deactivated. As for control for the SCell(s) of the MCG, as to an SCell in which UL CC is configured, UL transmission may be restricted by releasing only UL CC while maintaining DL CC.

As an MCG bearer configured between the UE and the MeNB, UL transmission is suspended. More specifically, in MCG bearers, an SRB may be suspended, and the UE may autonomously reconfigure a DRB as an SCG bearer. That is, the UE executes processing to reconfigure the DRB, set between the UE and the MeNB, between the UE and the SeNB. This processing may be executed as reconfiguration processing of a bearer, or may be performed as processing associated with deletion and addition of a bearer.

As to split bearer of DRB, the UE may perform PDCP data recovery (non-patent document 3). At this time, the UE may reestablish PDCP/RLC, and trigger retransmission of a packet from the PDCP layer to the SeNB.

Also, the UE may stop all TA timers of the pTAG, and the MCG-sTAG, or the UE may regard the TA timers have expired.

### <DL: in the case of intra-base station CA>

In the case of intra-base station CA in DL, the UE stops PDCCH monitoring in the PCell.

### <DL: in the case of DC>

In the case of DC, the UE stops PDCCH monitoring for the PCell and the MCG-SCell(s).

### <As to Sidelink(D2D)>

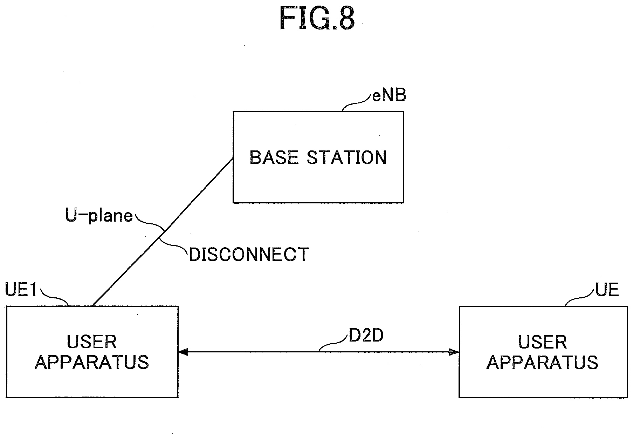

As to sidelink for performing D2D communication between UEs, for example, as shown in Fig. 8, when a link of C-plane between the eNB (or MeNB) and at least one side of the UEs that perform D2D communication is disconnected, for example, the UE that detects the disconnection of the link once disconnects connection of D2D communication with the other UE.

Here, as a resource for performing data transmission and reception of sidelink, there are a resource obtained from a resource pool obtained from broadcast information (system information), and a resource individually configured by a signaling from the eNB. Thus, when the UE that detects the disconnection of C-plane is performing D2D communication by selecting a resource within a resource pool obtained from broadcast information (system information), the UE may continue the D2D communication as it is.

Also, in a case where the UE uses a resource individually signaled, when the UE detects disconnection of C-plane, the UE may once stop D2D communication, discard the resource, and restart D2D communication by using a resource obtained from the resource pool obtained from broadcast information (system information)

### (Operation example 2:operation for reestablishing a link of C-plane)

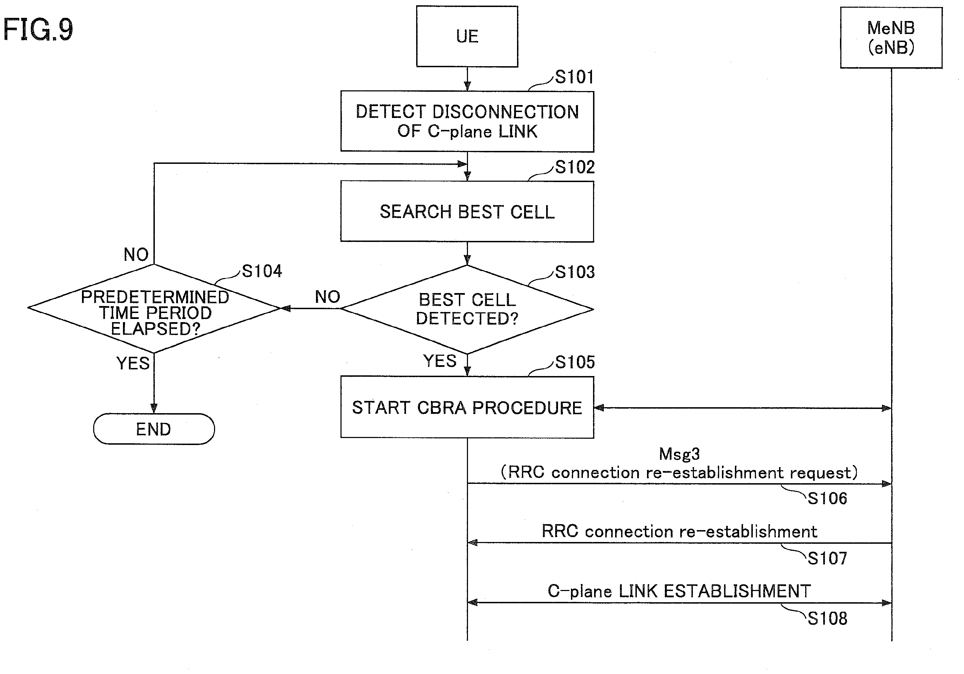

Next, an operation example for the UE to reestablish a link of C-plane between the UE and the base station is described with reference to a flowchart of Fig. 9.

As already described, in the present embodiment, the UE reestablishes a link (SRB/DCCH) of C-plane while maintaining a link (DRB/DTCH) of U-plane.

In step S101 of Fig. 9, when the UE detects disconnection of a link of C-plane, the UE starts cell search to search for a best cell (cell of the largest received power, cell of the best reception quality and the like) at that time (step S102).

In the example of Fig. 9, the UE has a timer for giving up cell search. The UE starts the timer after starting cell search, and when the timer expires without detecting the best cell (the best cell cannot be detected even though search is performed for a predetermined period), the UE stops the search (No in step S103, Yes in step S104).

In the cell search, as to carriers or cells for which the UE tries search, priority for search may be notified from the eNB/MeNB beforehand. Also, as to a cell to which the UE connects again (cell to be determined as the best cell), it may be limited to a cell for which broadcast information (system information) of the cell includes a specific IE (information element).

The IE includes information indicating whether the eNB that forms the cell supports the function of the present embodiment (function for performing reestablishment of C-plane while continuing U-plane even when C-plane is disconnected). Then, when the information indicates that the eNB supports the function, the UE can determine the cell as the best cell.

The IE may include information indicating whether the UE that supports the function is allowed to connect to the cell. Then, when the information indicates that the UE supports the function, the UE can determine the cell as the best cell.

Also, the IE may include information indicating whether it is allowed to connect while SCell/SCG is maintained when performing reconnection. Then, when the information indicates that it is allowed to connect while SCell/SCG is maintained when performing reconnection, the UE can determine the cell as the best cell.

As to reception power/reception quality of a carrier for the UE to search, quality of the maintained SCell (SCell in intra-base station CA, SCG-SCell in DC) may be used as a reference.

For example, the UE selects, as a candidate of the best cell, a cell that is better than reception power/reception quality obtained by anticipating a predetermined value X (X may be a positive value or a negative value) for reception power/reception quality (RSRP, RSRQ, SINR, RSSI and the like) of a PSCell or a designated SCell. That is, for example, when a PSCell is used as a reference, if reception power/reception quality of the PSCell is S, the UE determines a cell (cell which is not a serving cell) of reception power/reception quality Q that satisfies Q≧S+X as a candidate of the best cell.

Note that, as already described, in this procedure, communication in the SCell (SCell in intra-base station CA, SCG-SCell in DC) side is performed normally.

In step S103 of Fig. 9, it is assumed that the best cell is found (Yes in step S103). There may be a case where the base station of the best cell is the same as the eNB/MeNB that provided the disconnected C-plane link, or a case where the base station of the best cell is different from the eNB/MeNB.

When the UE found the best cell, the UE starts a CBRA (contention based random access) procedure in the cell (cell that becomes a PCell) (step S105). This is executed for the UE to be able to obtain UL timing and UL resources and to transmit a control message such as RRC connection re-establishment request and the like to the eNB/MeNB.

In the case of DC, for UL transmission of MeNB and for UL transmission of SeNB, the minimum guaranteed power is configured by parameters (parameters configured by RRC) of p-MeNB and p-SeNB respectively. However, in the CBRA, control may be performed such that sufficient power is provided for UL transmission to the MeNB. More specifically, for example, the UE performs UL transmission such as RACH preamble transmission and the like to the MeNB by regarding p-MeNB = infinite or p-MeNB = 23dBM or p-MeNB = p-SeNB+1.

Normally, in CBRA, the UE transmits a RACH preamble (message 1) to the eNB/MeNB, and the eNB/MeNB transmits a RACH response (message 2) to the UE. The message 2 includes TA information, UL grant and the like, so that the UE performs scheduled UL transmission as a message 3 (Msg 3) next.

In this example, the UE transmits an RRC connection re-establishment request as the Msg3 (step S106). The RRC connection re-establishment request is a message for requesting configuration (resume) of an SRB (example: SRB1) in the cell, and includes an identifier (example: C-RNTI) of the UE in the cell.

Although an example is shown here in which RRC connection re-establishment request is used, the message transmitted in step S106 is not limited to this. Any message can be used as long as it includes information identifying the UE.

Also, the message, including the RRC connection re-establishment request, may include an IE indicating that configuration of SCell / configuration of SCG is maintained. By this IE, the eNB/MeNB side can recognize that, different from normal reconnection, reconnection in which configuration of SCell/SCG is maintained occurs.

Also, in the case of DC, the message may include C-RNTI, Security key, ID of bearer, cell ID and the like that are used in the SeNB side. By including these pieces of information, DC can be started quickly in the new MeNB, and, under which SeNB the connection is maintained can be ascertained.

Although a CCCH is used as a logical channel for transmission of the RRC connection re-establishment request in step S106, an LCID different from an LCID (example: 00000) that is used for a conventional CCCH may be used.

When the eNB/MeNB receives the RRC connection re-establishment request in step S106, the eNB/MeNB transmits RRC connection re-establishment to the UE in step S107.

The UE that receives the RRC connection re-establishment determines the cell as a PCell/MCG, configures an SRB (example: SRB1), and performs configuration of a radio resource by radioResourceConfigDedicated and the like included in the message. Accordingly, a link of C-plane is established (reestablished) between the UE and the eNB/MeNB (step S108). The UE returns a completion message of the RRC connection re-establishment to the eNB/MeNB.

When the eNB/MeNB cannot understand content of the RRC connection re-establishment request, the eNB/MeNB transmits an RRC connection re-establishment reject, and enters NAS recovery (once becomes IDLE as RRC, and performs RRC connection request transmission again).

After the eNB/MeNB receives the completion message, the eNB/MeNB may reconfigure SRB2/DRB by RRC connection reconfiguration as necessary. Also, the SRB2/DRB may be configured by the RRC connection re-establishment in step S107. In addition, update of security may be performed by Security Mode command.

In the above-mentioned processing, specific information indicating to maintain SCell/SCG may be included in the RRC connection re-establishment request or the RRC connection reconfiguration. "To maintain SCell/SCG" here means, for example, "to maintain configuration of SCell/SCG".

When the UE detects the specific information from the message, the UE performs the above-mentioned operation (C-plain reestablishment operation while maintaining U-plane). When the UE does not detect the specific information, the UE may stop transmission and reception in U-plane (SCell/SCG) at that time point. When stopping transmission and reception in the U-plane, for example, the SCell (including an SCell of SCG) may be deactivated, or configuration itself of SCell/SCG may be deleted.

### (Operation example 3: operation when a link of C-plane cannot be established)

Next, operation is explained for a case where a link of C-plane cannot be established even though operation described in the operation example 2 is performed.

"The case where C-plane cannot be established" is a case where the best cell cannot be discovered within a predetermined period of time (in a case of Yes in step S104 of Fig. 9), or, even though the best cell is discovered, a case where the RA procedure does not complete, a case where the RRC connection re-establishment cannot be received from the eNB/MeNB, or a case where RRC connection re-establishment reject is received, or the like. In the following, an operation example 3-1 and an operation example 3-2 are described as more concrete control.

### <Operation example 3: disconnecting U-plane>

In a case where C-plane cannot be established, in the operation 3-1, the link of U-plane is disconnected so that establishment of C-plane is tried. In this example, to disconnect a link of U-plane is that the UE stops data communication between the UE and the SeNB(SCG)/eNB· RRH(SCell). More specifically, it is that, the UE stops (or interrupts) reception of a signal of DL (example: not performing monitoring of PDCCH), or, does not satisfy predetermined reception quality as for reception of a DL signal, or stops (interrupts) transmission of an UL signal, or does not assign sufficient transmission power for UL transmission of SeNB(SCG)/eNB·RRH(SCell), or does not satisfy predetermined transmission quality for transmission of an UL signal, or suspends transmission of a bearer configured in the SeNB(SCG)/eNB·RRH(SCell) (or regards that there is no data for the bearer/logical channel), or the like.

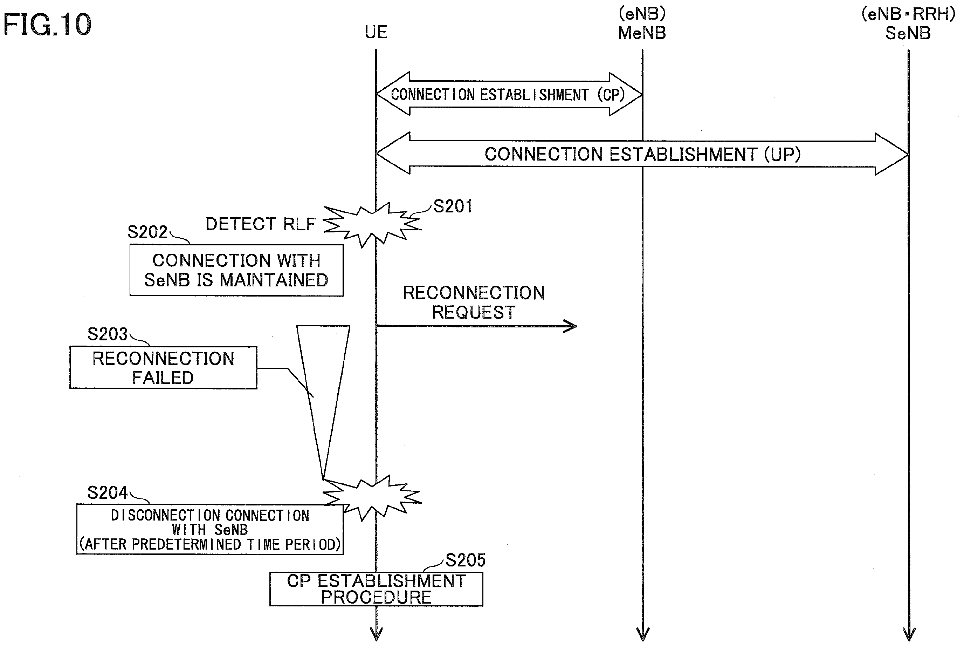

The operation example 3-1 is describe with reference to Fig. 10. In step S201, the user apparatus UE detects RLF of a link of C-plane. Then, the user apparatus UE starts the procedure for C-plane reestablishment while maintaining connection with the SeNB/eNB·RRH (step S202). However, reestablishment is failed (step S203).

Then, in step S204, the user apparatus UE disconnects a link of U-plane (connection with the SeNB and the like).

The operation of step S204 may be executed immediately after detecting inability of establishment of C-plane, or may be executed when a predetermined time period elapses from when it is detected that C-plane cannot be established. The control of elapse of predetermined time period can be performed by using a timer of the UE, for example.

Also, the operation of step S204 may be executed at a time point when U-plane (SCell/SCG/DRB/DTCH) data to be transmitted from the UE runs out after waiting until the data runs out, or, may be executed when a predetermined time period elapses after the data runs out. Or, the operation of step S204 may be executed at a time when it is detected that the UE does not receive DL data (or assignment information such as PDCCH) for a predetermined time period.

After step S204, the UE performs a procedure for reestablishing a link of C-plane. As this procedure, for example, a conventional procedure of reconnection (connection re-establishment) can be used. That is, the UE performs cell search and finds a best cell to transmit a reconnection request. In the operation example 3-1, since the link of U-plane between the SeNB/eNB·RRH and the UE is disconnected, for example, there is a possibility in that a link of C-place can be established by the connection with the SeNB/eNB· RRH in which the link of U-plane was established. Like this, according to the operation example 3-1, the possibility of C-plane establishment becomes higher than the case of C-plane reestablishment procedure of operation 2.

In step S205, a reconnection procedure (connection re-establishment) may be performed for the cell (SeNB/eNB·RRH) that has been configured as the SCell/SCG that serves U-plane.

Note that, at the time of disconnection of the link of U-plane in step S204, the UE may release configuration related to SCell/PSCell/SCG/DRB, or may continue to maintain it. In the case where the configuration is released, a configuration is newly configured in the above-mentioned reconnection procedure. In the case where the configuration is maintained, at the time when the UE receives a new configuration from the eNB by the reconnection procedure, the UE reconfigures the configuration.

As another operation example here, an operation example when C-plane is disconnected in the NW side is described. More specifically, when the MeNB detects quality deterioration of the UE (example: UL reception quality of the UE falls below a predetermined threshold), the following processing is performed as an example.
Step A) The MeNB notifies the SeNB side that connection of the UE is disconnected. The notification may include information for identifying the UE. The notification here is indicated as "notification A".
Step B) When the SeNB receives the notification A, the SeNB performs disconnection processing for the UE. There are various methods for disconnection processing, and it is not limited to a specific method. However, for example, there is a method to cause the UE to disconnect by defining a new signal (example: MAC CE).
Step B') If communication is being performed between SeNB and UE in step B (if there is data), disconnection processing may be performed after the communication ends.
Step B'') Instead of performing disconnection processing immediately after receiving the notification A, the disconnection processing may be performed after a predetermined time period elapses from when the notification A is received. The value of the predetermined time period may be held by the SeNB, or it may be notified from the MeNB by the notification A.
Step C) After performing the disconnection processing, the SeNB notifies the MeNB of disconnection completion.

After such disconnection processing, a procedure for reestablishing C-plane is performed as described before.

### <Operation example 3-2: reestablishing C-plane in the SeNB/eNB·RRH side without disconnecting U-plane>

In the present embodiment, since it is assumed that a link of C-plane in the PCell/MCG side is disconnected, a link in the SCell/PSCell/SCG that serves U-plane is being established. Here, "a link is being established" means that, predetermined quality is satisfied (RLF is not occurring) in a cell (specific cell, or, any cell, or all cells) of the SCell/PSCell/SCG so that transmission and reception of a signal can be performed normally in each cell, or, that abnormality is not detected in UL transmission of the SCell/PSCell/SCG (for example, random access abnormality is not detected (trial number of times of random access procedure does not exceed a predetermined threshold), UL RLC maximum retransmission excess is not detected, or abnormality is not detected in PDCP ciphering (deciphering) processing and/or header compression processing (example: CRC NG of ROHC header is not detected)) so that layer 2 normally operates in which transmission and reception are available, or the like.

Therefore, in the operation example 3, a link of C-plane is established in the side of SCell/PSCell/SCG (side of SeNB/eNB·RRH).

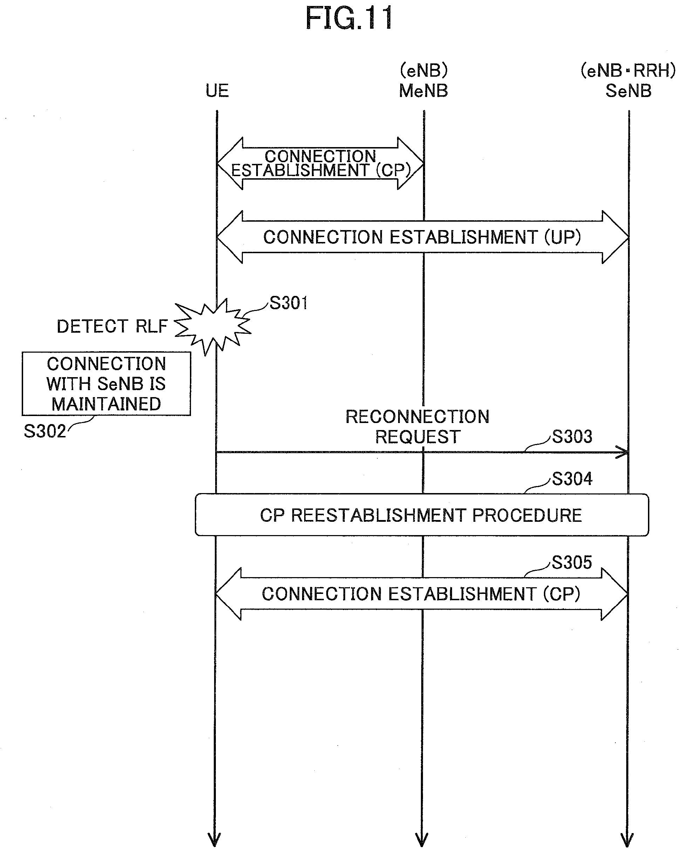

The operation example 3-2 is described with reference to Fig. 11. In step S301, when the user apparatus UE detects RLF of a link of C-plane, the user apparatus UE starts processing for link reestablishment of C-plane between the user apparatus UE and the SeNB/eNB·RRH while maintaining connection between the user apparatus UE and the SeNB/eNB·RRH (step S302).

Here, first, the user apparatus UE executes the CBRA procedure in a cell in the SeNB/eNB·RRH. The cell where the CBRA procedure is executed is a cell where an UL CC is configured in the case of eNB·RRH, or, in the case of SeNB, it is a cell that has become a PSCell or a cell, other than PSCell, where an UL CC is configured.

The UE transmits a message of reconnection request to the SeNB/eNB·RRH as a Msg3 in the CBRA procedure (step S303). This message is a message to notify of failure of C-plane establishment, and includes identification information of the UE. Transmission of the message is performed by using a CCCH, for example. When using the CCCH in this way, a conventional message such as RRC connection re-establishment Request may be diverted as the message. When diverting such a conventional message, information (PCI, C-RNTI, short-MAC-I) to be included in the massage may be adjusted as necessary such that the SeNB/eNB·RRH to connect to can identify the UE. For example, in the case where the control is performed to an SeNB in DC, the message includes PCI of the PSCell (or a cell where CBRA is performed) and C-RNTI.

Next, in step S304, the SeNB/eNB·RRH that has received the message transmits, to the UE, a message including instruction information . configuration information for establishing a link of C-plane. For example, the message includes an instruction for configuring SRB1. Also, the message may include information for designating which cell to use as a PCell for the UE. Or, without including such designation information of a PCell, the UE may implicitly configure, as a PCell, one of SCells (example: any cell for which recognition matches between UE and eNB, such as PSCell, good quality cell, one of SCellIndex/ServCellIndex, cell where CBRA is performed, or the like).

Note that, as the message, a conventional message such as RRC connection re-establishment may be diverted. The UE that has configured the PCell performs configuration completion notification to the SeNB/eNB·RRH. Accordingly, a link of C-plane is established (step S305).

Note that, while the above-mentioned procedure is being performed, other LCH/bearer, and communication of the serving cell continues.

Although, in the conventional technique, notification to upper layer (NAS layer) is performed when reconnection procedure (example: connection re-establishment) is failed, the notification may not be performed in the present embodiment. However, in a case where, also in the SeNB/eNB·RRH, reestablishment was failed incidentally, notification to the upper layer (NAS layer) may be performed.

### (Apparatus configuration)

Next, main configurations of the UE and the eNB that can execute operation described so far are described.

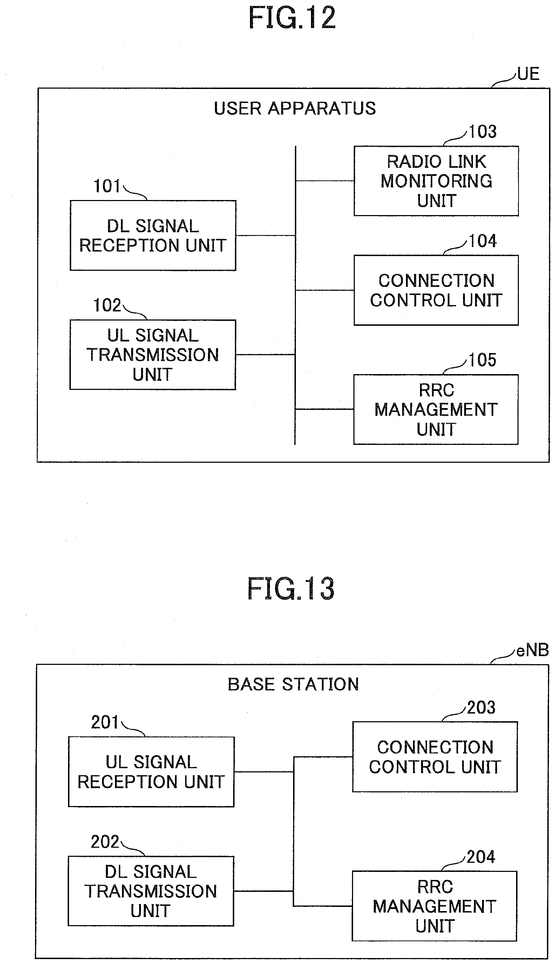

First, Fig. 12 shows a block diagram of the user apparatus UE according to the present embodiment. As shown in Fig. 12, the user apparatus UE includes a DL signal reception unit 101, an UL signal transmission unit 102, a radio link monitoring unit 103, a connection control unit 104 and an RRC management unit 105. Fig. 12 only shows functional units especially related to the embodiment of the present invention in the user apparatus UE, and the user apparatus UE also includes at least functions, not shown in the figure, for performing operation complying with LTE. Also, the configuration shown in Fig. 12 is merely an example, and, any functional segmentations and any names of functional units can be used as long as the user apparatus UE can execute processing described in the present embodiment.

The DL signal reception unit 101 includes functions configured to receive various signals from the eNB by radio and obtain a signal of an upper layer from the received physical layer signals. The UL signal transmission unit 102 includes functions configured to generate various signals of physical layer from an upper layer signal to be transmitted from the UE, and transmit the signals by radio. Each of the DL signal reception unit 101 and the UL signal transmission unit 102 includes functions configured to execute intra-base station CA and DC according to configurations.

It is assumed that each of the DL signal reception unit 101 and the UL signal transmission unit 102 is provided with a packet buffer and performs processing of layer 1 (PHY) and layer 2 (MAC, RLC, PDCP), but, not limited to these.

Also, the DL signal reception unit 101 and the UL signal transmission unit 102 include functions configured to execute the operation example 1 which is the initial operation when link disconnection of C-plane is detected.

The radio link monitoring unit 103 performs monitoring of a radio link (example: link of C-plane) to monitor whether RLF (example: link disconnection of C-plane) occurs.

The connection control unit 104 executes operation of the UE in the operation example 2 and the operation example 3 on reestablishment of C-plane when RLF of C-plane is detected. This execution includes to instruct the RRC management unit 105, the DL signal reception unit 101, the UL signal transmission unit 102 and the like to perform the operation.

The RRC management unit 105 includes a function configured to perform transmission and reception of a message with the eNB via the DL signal reception unit 101/UL signal transmission unit 102, and to perform processing of setting/change/management of CA/DC information, configuration change and the like.

Fig. 13 shows a functional block diagram of the eNB according to the present embodiment. The eNB is a base station that can become not only a single eNB but also an MeNB and an SeNB that forms DC.

As shown in Fig. 13, the eNB includes an UL signal reception unit 201, a DL signal transmission unit 202, a connection control unit 203 and an RRC management unit 204. Fig. 13 only shows functional units especially related to the embodiment of the present invention in the eNB, and the eNB also includes at least functions, not shown in the figure, for performing operation complying with LTE. Also, the configuration shown in Fig. 13 is merely an example, and, any functional segmentations and any names of functional units can be used as long as the eNB can execute processing described in the present embodiment.

The UL signal reception unit 201 includes functions configured to receive various signals from the UE by radio and obtain a signal of an upper layer from the received physical layer signals. The DL signal transmission unit 202 includes functions configured to generate various signals of physical layer from an upper layer signal to be transmitted from the eNB, and transmit the signals by radio. Each of the UL signal reception unit 201 and the DL signal transmission unit 202 includes a function configured to execute CA to perform communication by aggregating a plurality of CCs. Also, the UL signal reception unit 201 and the DL signal transmission unit 202 may include a radio communication unit, line an RRH, that is placed remotely from the main body (control unit) of the eNB.

It is assumed that each of the UL signal reception unit 201 and the DL signal transmission unit 202 is provided with a packet buffer and performs processing of layer 1 (PHY) and layer 2 (MAC, RLC, PDCP), but, not limited to these.

The connection control unit 203 executes operation of the eNB side in the operation example 2 and the operation example 3 on reestablishment of C-plane when RLF of C-plane is detected in the UE. This execution includes to instruct the RRC management unit 204, the UL signal reception unit 201, the DL signal transmission unit 202 and the like to perform the operation.

The RRC management unit 204 includes a function configured to perform transmission and reception of a message with the UE via the UL signal reception unit 201/DL signal transmission unit 202, and to perform processing of setting/change/management of CA/DC, configuration change and the like.

### <hardware configuration>

The block diagrams (Fig. 12 and Fig. 13) used for the description of the above-described embodiment illustrates blocks in units of functions. These functional blocks (components) are implemented by any combinations of hardware and/or software. Further, a method for implementing each functional block is not particularly limited. Namely, each functional block may be implemented by a single device that is physically and/or logically combined; or may be implemented by a plurality of devices by directly and/or indirectly (e.g., wired and/or wireless) connecting the two or more devices that are physically and/or logically separated.

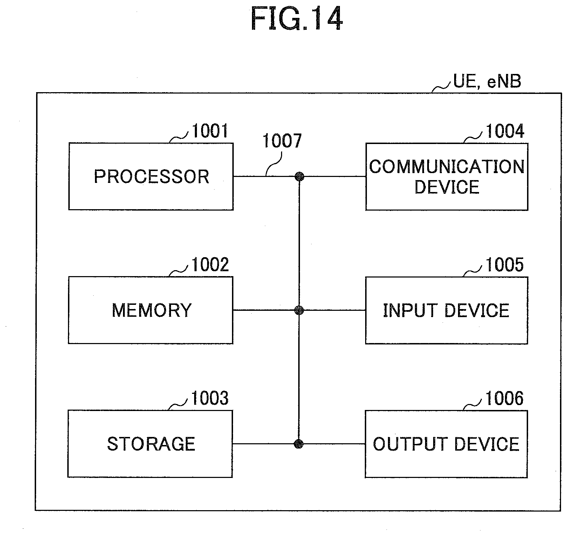

For example, the base station eNB and the user apparatus UE according to the embodiment of the present invention may function as computers for executing the process of the radio communication method according to the present invention. FIG. 14 is a diagram illustrating an example of the hardware configurations of the base station eNB and the user apparatus UE according to the embodiment of the present invention. Each of the above-described base station eNB and the user apparatus UE may be physically configured as a computer device including a processor 1001: a memory 1002: a storage 1003: a communication device 1004; an input device 1005; an output device 1006; a bus 1007, and so forth.

Note that, in the following description, the wording "device" may be replaced with a circuit, a device, a unit, and so forth. The hardware configurations of the base station eNB and the user apparatus UE may be arranged to include one or more of the devices illustrated in the figure; or may be arranged not to include a part of the devices.

Each function of the base station eNB and the user apparatus UE may be implemented by loading predetermined software (a program) onto hardware, such as a processor 1001 and a memory 1002, so that the processor 1001 performs operation to control communication by the communication device 1004, and reading and/or writing data in the memory 1002 and the storage 1003.

The processor 1001 controls the entire computer, for example, by operating an operating system. The processor 1001 may be formed of a central processing unit (CPU: Central Processing Unit) including an interface with peripheral devices; a controller; a processor, a resister, and so forth. For example, the UL signal reception unit 201, the DL signal transmission unit 202, the connection control unit 203 and the RRC management unit 204 of the base station eNB, and the DL signal reception unit 101, the UL signal transmission unit 102, the radio link monitoring unit 103, the connection control unit 104, and the RRC management unit 105 of the user apparatus UE may be implemented by the processor 1001.

Furthermore, the processor 1001 reads out a program (a program code), a software module, or data from the storage 1003 and/or the communication device 1004 onto the memory 1002; and performs various types of processes according to these. As the program, a program is used which is for causing the computer to execute at least a part of the operation described in the above-described embodiment. For example, the UL signal reception unit 201, the DL signal transmission unit 202, the connection control unit 203 and the RRC management unit 204 of the base station eNB, and the DL signal reception unit 101, the UL signal transmission unit 102, the radio link monitoring unit 103, the connection control unit 104, and the RRC management unit 105 of the user apparatus UE may be implemented by a control program that is stored in the memory 1002 and operated by the processor 1001 and the other functional blocks may be implemented in a similar manner. It is described that the above-described various types of processes are executed by the single processor 1001; however, these can be simultaneously or sequentially executed by two or more processors 1001. The processor 1001 may be implemented by one or more chips. Here, the program may be transmitted from a network via a telecommunication line.

The memory 1002 is a computer readable recording medium; and, for example, it can be formed of at least one of a ROM (Read Only Memory), an EPROM (Erasable Programmable ROM), an EEPROM (Electrically Erasable Programmable ROM), a RAM (Random Access Memory), and so forth. The memory 1002 may be referred to as a resister, a cache, a main memory (a main storage device), and so forth. The memory 1002 can store a program (a program code), a software module, and so forth that can be executed for implementing the communication method according to the embodiment of the present invention.

The storage 1003 is a computer readable recording medium; and, for example, it can be formed of at least one of an optical disk, such as a CD-ROM (Compact Disc ROM); a hard disk drive; a flexible disk; a magneto-optical disk (e.g., a compact disk, a digital versatile disk, a Blu-ray (registered trademark) disk); a smart card; a flash memory (e.g., a card, a stick, a key drive); a Floppy (registered trademark) disk; a magnetic strip, and so forth. The storage 1003 may be referred to as an auxiliary storage device. The above-described storage medium may be, for example, a database including the memory 1002 and/or the storage 1003; a server; or any other suitable medium.

The communication device 1004 is hardware (a transceiver device) for executing communication between computers via a wired and/or wireless network; and, for example, it can be referred to as a network device, a network controller, a network card, a communication module, and so forth. For example, the DL signal transmission unit 201 and the UL signal reception unit 202 of the base station eNB, and the UL signal transmission unit 102 and the DL signal reception unit 101 of the user apparatus UE may be implemented by the communication device 1004.

The input device 1005 is an input device that receives an input from outside (e.g., a keyboard, a mouse, a microphone, a switch, a button, a sensor, etc.). The output device 1006 is an output device for implementing output toward outside (e.g., a display, a speaker, a LED lamp, etc.). Note that the input device 1005 and the output device 1006 may have an integrated configuration (e.g., a touch panel).

Further, the devices, such as the processor 1001 and the memory 1002, are connected by a bus 1007 for communicating information. The bus 1007 may be formed of a single bus; or may be formed of buses which are different among devices.

Further, each of the base station eNB and the user apparatus UE may be arranged to include hardware, such as a microprocessor, a digital signal processor (DSP: Digital Signal Processor), an ASIC (Application Specific Integrated Circuit), a PLD (Programmable Logic Device), and a FPGA (Field Programmable Gate Array); and a part of or all of the functional blocks may be implemented by the hardware. For example, the processor 1001 may be implemented by at least one of these hardware components.

### (Summary of embodiment)

In the present embodiment, there is provided a user apparatus in a mobile communication system including a first base station that sets a link of a control plane between the first base station and the user apparatus, and a second base station that sets a link of a user plane between the second base station and the user apparatus, including:
radio link monitoring means configured to perform monitoring of a radio link; and
connection control means configured, when disconnection of the link of the control plane is detected by the radio link monitoring means, to perform reestablishment of the link of the control plane for the user apparatus while maintaining the link of the user plane.

According to the above configuration, it becomes possible to realize low delay communication in a mobile communication system including a first base station that sets a link of a control plane with a user apparatus and a second base station that sets a link of a user plane with the user apparatus.

When disconnection of the link of the control plane is detected by the radio link monitoring means, the connection control means may detect a best cell by performing cell search to perform reestablishment of the link of the control plane in the best cell. According to this configuration, the link of the control plane can be reestablished in a proper cell.

The connection control means may select a cell, as the best cell, in which specific information is broadcasted by system information. Also according to this configuration, the link of the control plane can be reestablished in a proper cell.

The connection control means may transmit a reconnection request to a base station of the best cell by executing a random access procedure in the best cell, and establish the link of the control plane between the base station and the user apparatus by receiving a reconnection instruction from the base station. According to this configuration, flexible control can be performed, for example, in which configuration can be included in a reconnection instruction.

The message of the reconnection request may include information indicating that configuration of the cell where the link of the user plane is configured is maintained. According to this configuration, the eNB side that receives the message can recognize that the message is a special message.

The connection control means may stop data transmission and reception in the link of the user plane when detecting that the reconnection instruction does not include specific information. According to this configuration, for example, the user apparatus can recognize whether it is proper to continue data transmission and reception in the link of the user plane, and can stop the data transmission and reception when it is not proper.

When reestablishment of the link of the control plane is failed, the connection control means may execute a procedure for reestablishment of the link of the control plane by disconnecting the link of the user plane. According to this configuration, for example, reestablishment of the link of the control plane can be performed without fail.

When reestablishment of the link of the control plane is failed, the connection control means may execute a procedure for reestablishment of the link of the control plane for the second base station. According to this configuration, for example, reestablishment of the link of the control plane can be performed while continuing the link of the user plane.

"Means" in the above-mentioned configuration of each apparatus may be replaced with "unit", "circuit", "device" or the like.

The user apparatus UE described in the present embodiment may include a CPU and a memory, and may be realized by executing a program by the CPU (processor), or may be realized by hardware such as hardware circuits including logics of processing described in the embodiment, or may be configured by coexistence of a program and hardware.

The base station eNB described in the present embodiment may include a CPU and a memory, and may be realized by executing a program by the CPU (processor), or may be realized by hardware such as hardware circuits including logics of processing described in the embodiment, or may be configured by coexistence of a program and hardware.

In the above, the embodiment of the present invention has been explained. However, the disclosed invention is not limited to the embodiment. Those skilled in the art will conceive of various modified examples, corrected examples, alternative examples, substituted examples, and the like. While specific numerical value examples are used to facilitate understanding of the present invention, such numerical values are merely examples, and any appropriate value may be used unless specified otherwise. Classification into each item in the description is not essential in the present invention, and features described in two or more items may be combined and used as necessary. Subject matter described in an item may be applied to subject matter described in another item (provided that they do not contradict).

It is not always true that the boundaries of the functional units or the processing units in the functional block diagram correspond to boundaries of physical components. The operations by the plural functional units may be physically performed by a single component. Alternatively, the operations by the single functional unit may be physically performed by plural components.

For convenience of explanation, the user apparatus and the base station have been explained by using functional block diagrams. However, such an apparatus may be implemented in hardware, software, or a combination thereof.

The software that operates by a processor of the user apparatus according to an embodiment of the present invention and the software that operates by a processor of the base station may be stored in any proper storage medium such as a Random Access Memory (RAM), a flash memory, a Read Only Memory (ROM), an EPROM, an EEPROM, a register, a hard disk (HDD), a removable disk, a CD-ROM, a database, a server and the like.

The present invention is not limited to the above-mentioned embodiment and is intended to include various variations, modifications, alterations, substitutions and so on without departing from the spirit of the present invention.

The present patent application claims priority based on Japanese patent application No. 2015-159694, filed in the JPO on August 12, 2015, and the entire contents of the Japanese patent application No. 2015-159694 are incorporated herein by reference.

### DESCRIPTION OF REFERENCE SIGNS

- UE: user apparatus
- eNB: base station
- 101: DL signal reception unit
- 102: UL signal transmission unit
- 103: radio link monitoring unit
- 104: connection control unit
- 105: RRC management unit
- 201: UL signal reception unit
- 202: DL signal transmission unit
- 203: connection control unit
- 204: RRC management unit
- 1001: processor
- 1002: memory
- 1003: storage
- 1004: communication device
- 1005: input device
- 1006: output device

## Claims

1. A user apparatus in a mobile communication system including a first base station that sets a link of a control plane between the first base station and the user apparatus, and a second base station that sets a link of a user plane between the second base station and the user apparatus, comprising:
radio link monitoring means configured to perform monitoring of a radio link; and
connection control means configured, when disconnection of the link of the control plane is detected by the radio link monitoring means, to perform reestablishment of the link of the control plane for the user apparatus while maintaining the link of the user plane.

2. The user apparatus as claimed in claim 1, wherein, when disconnection of the link of the control plane is detected by the radio link monitoring means, the connection control means detects a best cell by performing cell search to perform reestablishment of the link of the control plane in the best cell.

3. The user apparatus as claimed in claim 2, wherein the connection control means selects a cell, as the best cell, in which specific information is broadcasted by system information.

4. The user apparatus as claimed in claim 2 or 3, wherein the connection control means transmits a reconnection request to a base station of the best cell by executing a random access procedure in the best cell, and establishes the link of the control plane between the base station and the user apparatus by receiving a reconnection instruction from the base station.

5. The user apparatus as claimed in claim 4, wherein the message of the reconnection request includes information indicating that configuration of the cell where the link of the user plane is configured is maintained.

6. The user apparatus as claimed in claim 4 or 5, wherein the connection control means stops data transmission and reception in the link of the user plane when detecting that the reconnection instruction does not include specific information.

7. The user apparatus as claimed in any one of claims 1-6, wherein, when reestablishment of the link of the control plane is failed, the connection control means executes a procedure for reestablishment of the link of the control plane by disconnecting the link of the user plane.

8. The user apparatus as claimed in any one of claims 1-7, wherein, when reestablishment of the link of the control plane is failed, the connection control means executes a procedure for reestablishment of the link of the control plane for the second base station.

9. A connection control method executed by a user apparatus in a mobile communication system including a first base station that sets a link of a control plane between the first base station and the user apparatus, and a second base station that sets a link of a user plane between the second base station and the user apparatus, comprising:
monitoring a radio link; and
when disconnection of the link of the control plane is detected by the monitoring of the radio link, performing reestablishment of the link of the control plane for the user apparatus while maintaining the link of the user plane.
